# FASCICULE DE BREVET EUROPEEN

(11) **EP 0 813 471 B1**
(45) Date de publication et mention de la délivrance du brevet: **11.04.2001**
(21) Numéro de dépôt: 96905894.0
(22) Date de dépôt: 01.03.1996
(51) Int. Cl.: B29C 39/42, B29C 35/02, B29C 39/00

(54) **PROCEDE DE FABRICATION D'UN SUBSTRAT EN VERRE ORGANIQUE TRANSPARENT ET SUBSTRAT AINSI OBTENU**
VERFAHREN ZUR HERSTELLUNG EINES AUS DURCHSICHTIGEM ORGANISCHEM GLAS BESTEHENDEN SUBSTRATS SOWIE HERGESTELLTES SUBSTRAT
METHOD FOR MAKING A TRANSPARENT ORGANIC GLASS SUBSTRATE, AND RESULTING SUBSTRATE

(30) Priorité: 03.03.1995 FR 9502520
(43) Date de publication de la demande: 29.12.1997
(73) Titulaire: ESSILOR INTERNATIONAL (COMPAGNIE GENERALE D'OPTIQUE), F-94227 Charenton cédex (FR)
(72) Inventeur: CANO, Jean-Paul, F-94470 Chennevières-sur-Marne (FR); WEBER, Steven, Clearwater, FL 34622 (US); TARDIEU, Pascale, F-75011 Paris (FR); LELARD, Nathalie, F-94100 Saint-Maur-des-Fossés (FR)
(74) Mandataire: Catherine, Alain
(86) Numéro de dépôt international: FR9600323
(87) Numéro de publication internationale: WO9627488

(56) Documents cités:
- GB-A- 818 471
- GB-A- 2 061 982
- US-A- 3 171 869
- US-A- 3 850 675
- US-A- 4 880 667
- US-A- 5 200 483
- PATENT ABSTRACTS OF JAPAN vol. 17, no. 34 (M-1357), 22 Janvier 1993 & JP,A,04 255308 (SEKISUI CHEM CO LTD), 10 Septembre 1992,
- PATENT ABSTRACTS OF JAPAN vol. 17, no. 34 (M-1357), 22 Janvier 1993 & JP,A,04 255311 (SEKISUI CHEM CO LTD), 10 Septembre 1992,

## Description

La présente invention concerne d'une manière générale un nouveau procédé de fabrication de substrats en verre organique transparent ainsi que de nouveaux substrats en verre organique transparent, par exemple, des articles optiques et ophthalmiques en verre organique transparent tels que des lentilles optiques et ophtalmiques et des verres de lunette.

Le nouveau procédé de fabrication convient tout particulièrement pour la fabrication de substrats et articles en verre organique transparent, photochromique, c'est-à-dire des substrats et articles comprenant une substance photochromique capable de changer de manière réversible de couleur ou d'opacité lorsqu'ils sont exposés à un rayonnement particulier.

On entend par "substrat en verre organique transparent" un substrat en matériau polymère organique transparent.

Les articles optiques et ophtalmiques en verre organique peuvent être obtenus sous leur forme définitive par coulée d'une composition polymérisable appropriée entre deux parties, en verre minéral, d'un moule présentant des géométries de surface requises. La composition polymérisable est alors polymérisée. On obtient ainsi des articles optiques et ophtalmiques tels que des lentilles ou des verres de lunette dont les deux faces se trouvent dans leur état final.

Il est également usuel de fabriquer des articles optiques et ophtalmiques semi-finis comportant, après moulage, une seule face à sa géométrie finale, la deuxième face pouvant être surfacée à la demande.

L'opération de surfaçage de la seconde face provoque une augmentation de la température de l'article semi-fini et il est indispensable que le verre organique ou polymère constituant l'article soit suffisamment rigide et non-déformable à la température atteinte. Le verre organique doit de ce fait posséder de bonnes propriétés thermomécaniques qui seront nécessaires également pour toutes les opérations de traitement ultérieur comme le vernissage, la coloration ou les traitement anti-reflets.

Pour obtenir de substrats photochromiques, les substrats moulés, après achèvement de la polymérisation complète de la composition polymérisable sont de manière générale mis en contact avec une substance photochromique que l'on fait diffuser dans les substrats pour former dans ces substrats une couche superficielle mince contenant la substance photochromique.

Un procédé convenant particulièrement à la réalisation d'un substrat ou article photochromique est le procédé dit de "transfert thermique" décrit dans le brevet des Etats-Unis N° 4 286 957.

Brièvement, ce procédé consiste à appliquer sur au moins une surface du substrat en verre organique moulé une couche d'un matériau contenant une substance organique photochromique, puis à chauffer le substrat ainsi revêtu pour implanter la substance photochromique dans la partie du substrat sousjacente à la surface revêtue du matériau photochromique et ainsi former une couche superficielle mince contenant une substance photochromique dans le substrat.

Les propriétés importantes pour les substances photochromiques utilisées dans les articles optiques et ophtalmiques sont la cinétique de coloration/décoloration, l'intensité de la coloration et la gamme de températures dans laquelle la substance photochromique est efficace. En ce qui concerne la cinétique de coloration/décoloration, il est important que la vitesse de coloration ou de décoloration de l'article optique ou ophtalmique en fonction de l'intensité du rayonnement incident soit la plus grande possible. Egalement, il est important d'obtenir une intensité de coloration suffisante pour assurer une bonne protection. Ces deux propriétés des substances photochromiques dépendent de la nature du substrat (matériau-hôte).

Des compositions polymérisables particulièrement adaptées à la fabrication d'articles optiques et ophtalmiques sont les compositions polymérisables comportant comme composant principal des monomères (allyl carbonate) de polyols, et en particulier, le bis (allyl carbonate) de diéthylène glycol.

Bien que des articles photochromiques fabriqués avec de telles compositions photopolymérisables présentent des propriétés photochromiques convenables, celles-ci sont loin d'être optimales pour des articles optiques et ophtalmiques tels que des lentilles optiques et ophtalmiques et des verres de lunette.

On a proposé dans le brevet des Etats-Unis n° 4 994 208, pour améliorer les propriétés photochromiques des articles optiques et ophtalmiques, des compositions polymérisables modifiées, et en particulier l'addition aux compositions polymérisables à base de monomères (allyl carbonate) de polyol de certains uréthanes aliphatiques. Le copolymère obtenu, utilisé pour la fabrication d'articles photochromiques, présente une réponse photochromique améliorée, en particulier en comparaison avec des articles photochromiques formés d'un homopolymère. Toutefois, les compositions polymérisables décrites dans ce brevet des Etats-Unis n° 4 994 208 ont l'inconvénient d'avoir une durée de conservation relativement courte.

On a proposé dans le brevet des Etats-Unis n° 5 200 483, pour remédier à ce défaut de faible durée de conservation des compositions décrites dans le brevet des Etats-Unis n° 4 994 208, de modifier ces compositions polymérisables par addition d'un mélange spécifique d'uréthanes aliphatiques.

Ainsi, pour obtenir des articles optiques et ophtalmiques ayant des propriétés photochromiques optimales, il est nécessaire d'utiliser pour la fabrication de ces articles des compositions spécifiques, ce qui bien évidemment limite le choix des verres organiques utilisables par l'homme du métier.

En outre, les verres organiques obtenus à partir de ces compositions spécifiques présentent généralement des propriétés ménaniques, en particulier thermomécaniques, abaissées, de sorte que les articles optiques et ophtalmiques photochromiques résultent généralement d'un compromis entre l'obtention des propriétés photochromiques les meilleures et des propriétés mécaniques, en particulier thermomécaniques, adéquates pour l'article.

L'obtention de propriétés thermomécaniques convenables est une caractéristique particulièrement importante dans le cas d'articles optiques et ophtalmiques semi-finis. En effet, l'opération de surfaçage ultérieure de la face non finie de l'article provoque un échauffement de l'article semi-fini, et comporte un risque important de déformation et d'endommagement de l'article si celui-ci ne présente pas des propriétés thermomécaniques suffisantes.

La présente invention a pour objet un procédé de fabrication de substrats et d'articles en verre organique transparent réticulé qui remédie aux inconvénients ci-dessus et en particulier, qui permet l'utilisation pour la fabrication de substrats et d'articles optiques et ophtalmiques photochromiques ayant à la fois des propriétés photochromiques et des propriétés mécaniques, en particulier thermomécaniques, améliorées, d'une vaste gamme de compositions polymérisables.

On entend par verre organique réticulé un polymère organique formant un réseau tridimensionnel.

Dans la suite de la description et des revendications, le verre organique transparent désigne un verre organique transparent réticulé.

La présente invention a également pour objet des substrats et articles en verre organique transparent finis ou semi-finis utiles pour la fabrication de substrats et articles optiques et ophtalmiques photochromiques finis ou semi-finis ayant des propriétés photochromiques et thermomécaniques améliorées fabriqués à partie d'une vaste gamme de verres organiques transparents.

Selon l'invention, on atteint les buts ci-dessus par un procédé de fabrication d'un substrat en verre organique transparent qui comprend :
(a) l'introduction dans un moule d'une composition polymérisable en un verre organique transparent ; et
(b) la polymérisation de la composition polymérisable dans des conditions telles que le substrat en verre organique transparent résultant présente au moins une couche superficielle mince polymérisée à un degré d'avancement et/ou de réticulation notablement inférieur à celui du reste du substrat.

Le degré d'avancement de la polymérisation est la fraction des fonctions réactives de la composition polymérisable, ayant effectivement réagi lors de la polymérisation, qui a conduit au substrat final.

Le degré de réticulation, encore appelé densité de réticulation, mesure le caractère lâche ou serré du réseau, c'est-à-dire la concentration en noeuds ou points de pontage entre chaînes du réseau. Plus cette concentration est élevée, plus le degré de réticulation est élevé également.

Un paramètre équivalent pour mesurer le caractère lâche ou serré du réseau est la mase moléculaire moyenne Mc d'un chaînon entre deux noeuds consécutifs du réseau. Le réseau est d'autant plus serré que Mc est faible.

Les techniques qui permettent de mettre en évidence des différences de degré d'avancement de la réaction de polymérisation sont bien connus de l'homme du métier.

En particulier, dans le cas de réactions de polymérisation mettant en jeu des monomères porteurs de doubles liaisons insaturées, les techniques de spectroscopie infrarouge ou RMN sont particulièremend adaptées.

Pour caractériser les différences de degré de réticulation, on peut utiliser les techniques de gonflement dans un solvant. Le taux de gonflement sera d'autant plus élevé que le degré de réticulation sera faible.

On peut également effectuer des mesures de température de transition vitreuse Tv par analyse thermique ou thermomécanique, ou des mesures de microdureté.

Selon un mode de réalisation recommandé de l'invention, on réalise la couche superficielle mince polymérisée à un degré d'avancement et/ou de réticulation inférieur en mettant en contact au moins une surface de la composition polymérisable avec un inhibiteur de polymérisation et/ou un agent de transfert de chaîne. L'inhibiteur de polymérisation et/ou l'agent de transfert de chaîne diffuse et pénètre sous la surface de la composition polymérisable dans une faible épaisseur. Ainsi, lors de la polymérisation la couche comportant l'inhibiteur de polymérisation et/ou l'agent de transfert de chaîne polymérise différemment du reste de la composition, et possède à la fin de l'étape de polymérisation un degré d'avancement et/ou de réticulation inférieur au reste du substrat polymérisé et/ou réticulé.

Bien évidemment, le degré d'avancement et/ou de réticulation de la couche superficielle mince dépend de la nature de l'inhibiteur et/ou de l'agent de transfert de chaîne, du taux d'inhibiteur et/ou d'agent de transfert de chaîne diffusé dans la composition et des conditions de polymérisation.

On peut également réaliser la couche mince superficielle de plus faible degré d'avancement et/ou de réticulation en revêtant au moins une surface du moule en contact avec au moins une surface de la composition polymérisable avec une couche d'une composition contenant un inhibiteur de polymérisation et/ou un agent de transfert de chaîne. L'inhibiteur de polymérisation diffuse dans la composition polymérisable au cours de la polymérisation de sorte qu'il provoque un retard au démarrage de la réaction dans la portion de la composition inhibée. L'agent de transfert de chaîne intervient, pous sa part, en limitant le degré de réticulation de la couche superficielle dans laquelle il a diffusé. En réglant les conditions de polymérisation, on peut obtenir un substrat polymérisé comportant une couche superficielle mince ayant un degré d'avancement et/ou de réticulation inférieur au reste du substrat.

A titre d'exemple, on peut utiliser comme inhibiteur de l'oxygène ou une hydroquinone telle que la méthoxyhydroquinone (MHQ), stabilisée par légère acidification du milieu (acide acétique). D'autres familles d'inhibiteurs convenables sont les quinones, les aldéhydes aromatiques, les composés aromatiques nitrés et les nitroso cétones. L'inhibiteur recommandé est l'oxygène.

A titre d'exemple, on peut citer comme agents de transfert de chaîne convenables, les hydrocarbures aliphatiques bromés ou chlorés tels que CCl₄ ou CHCl₃ ou les thiols aliphatiques. Un agent de transfert de chaîne particulièrement approprié est le diisopropényl benzène (DIBEP).

Bien évidemment, la couche mince superficielle de plus faible degré d'avancement et/ou de réticulation n'est pas une couche de degré d'avancement et/ou de réticulation homogène, mais est en fait une couche ayant un gradient de degré d'avancement et/ou de réticulation. Le degré de polymérisation et/ou réticulation de cette couche est plus faible près de la surface et croît, généralement, depuis la surface jusqu'à la valeur maximale du degré d'avancement et/ou de réticulation atteint dans le reste du substrat.

La couche superficielle mince de degré d'avancement et/ou de réticulation inférieur a, en général, une épaisseur comprise entre 30µm et 200µm, de préférence entre 30µm et 150µm. On recommande particulièrement une épaisseur comprise entre 40 et 80µm.

La polymérisation de la composition polymérisable peut s'effectuer par tout procédé de polymérisation connu. Les procédés de polymérisation convenant particulièrement dans la présente invention, sont la polymérisation amorcée thermiquement et la polymérisation à amorçage photochimique. Un procédé de polymérisation particulièrement recommandé dans le procédé de la présente invention est la polymérisation photochimique par le rayonnement ultra-violet. Le rayonnement ultra-violet utilisé est en général un rayonnement UV-A. Les conditions de polymérisation dépendent bien évidemment de la nature de la composition polymérisable utilisée et du degré d'avancement et/ou de réticulation voulu pour le substrat.

De tels procédés de polymérisation amorcée thermiquement et par rayonnement ultra-violet sont décrits, entre autres, dans le brevet des Etats-Unis No. 5 200 483 et la demande de brevet français No. 2 699 541.

De préférence, on soumet le substrat à un recuit classique de relaxation des contraintes qui consiste, en général, à chauffer le substrat obtenu dans l'air à une température de 100-120°C pendant environ 1 à 5 heures.

Selon un mode de réalisation particulièrement recommandé de l'invention, le procédé de fabrication d'un substrat en verre organique transparent comprend :
(a) l'introduction dans un moule d'une composition photopolymérisable par le rayonnement ultra-violet en un substrat en verre organique transparent ;
(b) l'irradiation de la composition polymérisable par un rayonnement ultra-violet pour partiellement polymériser la composition et obtenir un prépolymère ;
(c) l'arrêt de l'irradiation après obtention du prépolymère ;
(d) la mise en contact d'au moins une surface du prépolymère avec un inhibiteur de polymérisation pour former dans le prépolymère une mince couche superficielle inhibée ;
(e) l'irradiation du prépolymère ayant au moins une couche mince superficielle inhibée jusqu'à polymérisation complète du prépolymère pour obtenir un substrat en verre organique transparent ayant au moins une mince couche superficielle polymérisée à un degré d'avancement inférieur au degré d'avancement du reste du substrat ; et
(f) facultativement, le recuit du substrat.

De préférence, l'inhibition superficielle du prépolymère s'effectue par mise en contact d'une surface au moins du prépolymère avec une atmosphère contenant un inhibiteur de polymérisation. Un inhibiteur particulièrement recommandé est l'oxygène, et l'atmosphère contenant l'inhibiteur sera de préférence l'air, ou un mélange gazeux contenant de l'oxygène. On peut utiliser d'autres inhibiteurs en fonction de la nature du prépolymère.

Le degré d'inhibition dépendra de la nature de l'inhibiteur choisi et des conditions de diffusion de l'inhibiteur. En général, il est recommandé que le prépolymère soit inhibé jusqu'à une profondeur d'environ 40 à 80µm de la surface exposée à l'atmosphère d'inhibition, c'est-à-dire présente un degré d'inhibition suffisant au moins jusqu'à une telle profondeur pour permettre l'obtention d'une couche superficielle polymérisée à un degré d'avancement notablement inférieur, d'une épaisseur d'environ 40 à 80µm.

Selon un autre mode recommandé de réalisation de l'invention, le procédé de fabrication d'un substrat en verre organique transparent comprend :
(a) le revêtement d'au moins une surface interne d'un moule avec une composition contenant un inhibiteur de polymérisation ou un agent de transfert de chaîne.
(b) l'introduction dans le moule d'une composition polymérisable par un rayonnement ultra-violet ;
(c) l'irradiation de la composition par le rayonnement ultra-violet pour obtenir un substrat en verre organique transparent ayant au moins une mince couche superficielle polymérisée à un degré d'avancement et/ou de réticulation inférieur au reste du substrat; et
(d) facultativement, le recuit du substrat.

L'épaisseur de la couche mince de plus faible degré d'avancement et/ou de réticulation dépendra de la nature de l'inhibiteur ou de l'agent de transfert de chaîne, de la nature de la matrice de la composition polymérisable et des conditions d'irradiation. De préférence, cette couche mince aura une épaisseur d'environ 40 à 80 µm. Toutefois, des épaisseurs allant jusqu'à 100 µm s'avèrent également des plus souhaitables.

Les compositions polymérisables utiles dans le procédé de la présente invention sont connues dans la technique et comprennent toutes les compositions qui peuvent être polymérisées en un verre organique transparent.

De telles compositions sont décrites, entre autres, dans les brevets des Etats-Unis Nos 4.286.957, 4.880.667 et 5.200.483 et dans la demande de brevet français n° 2.699.541.

Les compositions polymérisables préférées sont les compositions polymérisables comprenant comme composant essentiel un monomère ou un mélange de monomères polymérisables par voie radicalaire choisis parmi les monomères vinyliques , styréniques (allyl carbonate) de polyols, acryliques, méthacryliques, en particulier ceux décrits dans la demande de brevet français n° 2.699.541.

Parmi les monomères (méth)acryliques, on peut citer les alkyl(méth)acrylates, tels que le méthyl(méth)acrylate, l'éthyl(méth)acrylate, le butyl(méth)acrylate, l'isobutyl(méth)acrylate, le butanedioldi(méth)acrylate, le triméthylpropane tri(méth)acrylate, les aryl(méth)acrylates, tels que le phényl(méth)acrylate, le benzyl(méth)acrylate et le phénoxyéthyl(méth)acrylate.

Les monomères monofonctionnels appartenant à la liste ci-dessus doivent être utilisés conjointement avec un monomère polyfonctionnel permettant d'assurer la réticulation.Parmi les monomères (allyl carbonate) de polyols, on peut citer le bis(2-chloroallyl carbonate) d'éthylène glycol, le bis (2-méthallyl carbonate) de diéthylène glycol, le bis(allyl carbonate) de diéthylène glycol, le bis(allyl carbonate) de triéthylène glycol, le bis (2-ethylallyl carbonate) de propylène glycol, le bis(allyl carbonate) de propanediol-1,3, le bis (allyl carbonate) de butane diol-1,3, le bis (2-bromoallylcarbonate) de butanediol-1,4, le bis(allyl carbonate) de dipropylène glycol, le bis(2-éthylallyl carbonate) de triméthylène glycol, le bis (allyl carbonate) de pentaméthylène glycol, et le bis (allyl carbonate) d'isopropylène bisphénol. Ces monomères (allyl carbonate) de polyols, ainsi que leur préparation, sont plus particulièrement décrits dans les brevets des Etats-Unis No. 4 637 698 et No. 5 200 483.

Les monomères décrits dans la demande de brevet français No. 2 699 541 répondent à la formule : 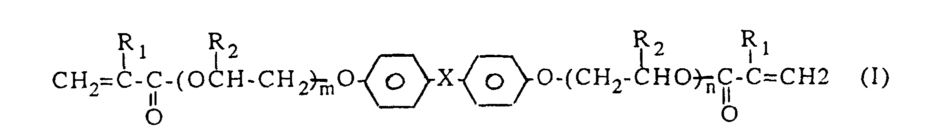 dans laquelle R₁ et R₂ désignent indépendamment l'un de l'autre, l'hydrogène ou un radical alkyl inférieur en C₁-C₆, X désigne O, S, CO, SO₂, -CH₂-, -CH=CH-, ou 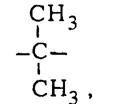 m et n sont des entiers et O ≤ m + n ≤ 10.

Les monomères particulièrement préférés sont le bis(allyl carbonate) de diéthylène glycol et le 2,2-bis(4-méthacryloxydiéthoxyphényl) propane.

Outre les monomères mentionnés ci-dessus, les compositions polymérisables utiles dans la présente invention peuvent comporter des proportions mineures d'autres monomères tels que des uréthanes et des thiouréthanes.

Les compositions polymérisables utiles dans la présente invention peuvent comporter en outre tout adjuvant classiquement utilisé dans la formulation de verres organiques transparents tels que des catalyseurs de polymérisation, des catalyseurs de réticulation, des photoinitiateurs, des additifs anti-jaune, des absorbeurs UV, des stabilisateurs thermiques, ... etc.

Le substrat en verre organique transparent comportant une mince couche superficielle polymérisée à un degré d'avancement et/ou de réticulation, inférieur au reste du substrat est un produit stable, qui peut être stocké et commercialisé tel quel pour la fabrication d'articles ophtalmiques et en particulier en vue d'y réaliser une couche photochromique.

La présente invention concerne donc également un substrat en verre organique transparent comportant au moins une couche mince superficielle polymérisée à un degré de polymérisation et/ou de réticulation inférieur au reste du substrat.

On peut réaliser une couche mince superficielle photochromique dans le substrat en verre organique comportant une couche mince superficielle de degré d'avancement et/ou de réticulation inférieur par tout procédé de photochromatisation connu et en particulier par imbibation ou par transfert thermique d'une substance photochromique.

Le procédé d'imbibation est décrit dans le brevet des Etats-Unis No.4 289 497.

Le procédé préféré selon la présente invention est le procédé de transfert thermique. Ce procédé est décrit dans les brevets des Etats Unis No. 4 286 957 et No. 4 880 667.

Ce procédé appliqué à la présente invention, comprend la mise en contact de la surface du substrat adjacente à la couche superficielle mince de degré d'avancement et/ou de réticulation inférieur avec un matériau photochromique et l'application de chaleur au matériau photochromique en contact avec le substrat. La substance photochromique du matériau diffuse dans la couche mince superficielle et on obtient ainsi un substrat en verre organique transparent comportant une couche mince superficielle contenant la substance photochromique.

On peut utiliser pour la photochromatisation toute substance photochromique appropriée. De telles substances photochromiques sont connues et décrites dans les brevets des Etats-Unis No. 4 166 043, No. 4 286 957, No. 4 367 170, et No. 4 880 667.

De préférence, le matériau photochromique est appliqué sur la surface du substrat sous forme d'un film de la substance photochromique dispersé dans un vernis approprié.

Parmi les substances photochromiques utiles dans la présente invention, on peut citer les spiropyranes, les dithizonates métalliques, les spirooxazines et les chromènes.

Les substances photochromiques préférées selon l'invention sont les spirooxazines et les chromènes.

Les spirooxazines sont des substances photochromiques connues et sont décrites plus particulièrement dans le brevet des Etats-Unis No. 4 637 698.

Les chromènes sont également des substances photochromiques bien connues qui sont décrites, entre autres, dans le brevet des Etats-Unis No. 5 066 818 et la demande de brevet français No. 2 688 782.

La présente invention concerne donc également, un procédé de fabrication d'un substrat en verre organique transparent comportant au moins une couche mince superficielle contenant une substance photochromique et dont le degré d'avancement et/ou de réticulation est inférieur à celui du reste du substrat et qui comprend l'introduction de la substance photochromique par mise en contact de la surface adjacente à la couche mince superficielle de degré d'avancement et/ou de réticulation inférieur d'un substrat obtenu par le procédé décrit précédemment avec un matériau contenant une substance photochromique et la diffusion de la substance photochromique dans cette couche. De préférence, on utilise selon l'invention le transfert thermique pour introduire la substance photochromique dans la couche superficielle mince.

L'invention concerne également un substrat en verre organique transparent comportant au moins une couche superficielle mince comprenant une substance photochromique et dont le degré d'avancement et/ou de réticulation est inférieur à celui du reste du substrat.

De préférence encore, le substrat est un article ophtalmique photochromique tel q'unc lentille ophtalmique ou des verres de lunette.

La suite de la description sc réfère aux figures annexées qui représentent, respectivement :
Figure 1, une représentation schématique d'un moule pour la fabrication d'un substrat en verre organique selon l'invention;
Figures 2a à 2i, des représentations schématiques des étapes d'une réalisation préférée du procédé selon l'invention, et
Figure 3, un graphe du taux d'avancement de la polymérisation en fonction de la profondeur dans un substrat selon l'invention.

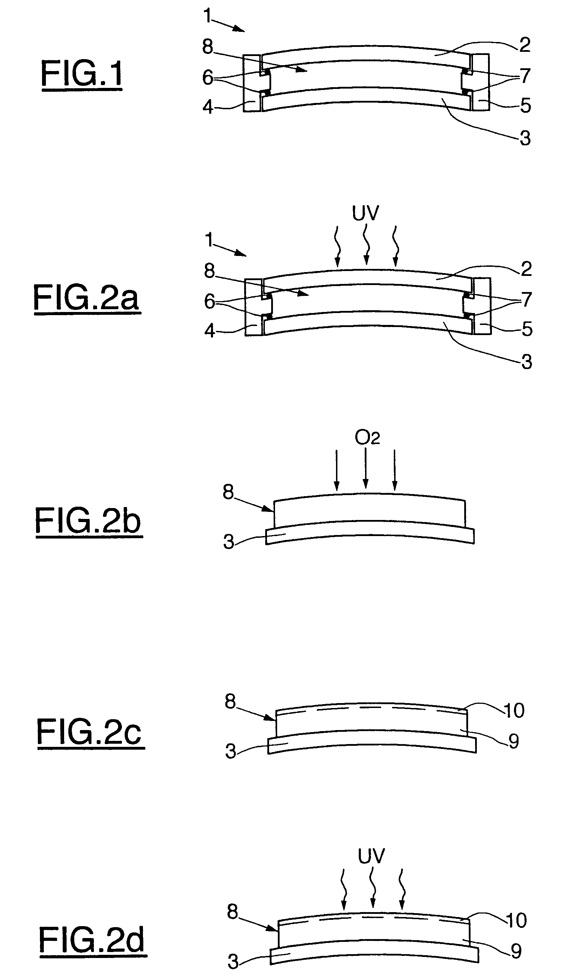

En se référant à la figure 1, on a représenté schématiquement un moule pour la fabrication d'un substrat en verre organique transparent utile dans le procédé de la présente invention.

Le moule 1 comprend deux parties en verre minéral 2 et 3, une de ces parties au moins ayant la géométrie de surface requise pour l'obtention d'un substrat ou article optique ou ophtalmique semi-fini.

Bien évidemment, si l'on souhaite obtenir un substrat ou article ophtalmique fini, les deux parties de moule 2 et 3 devront être pourvues de la géométrie de surface requise.

Les parties 2 et 3 du moule sont maintenues en place par des parties latérales 4 et 5 du moule et par des joints d'étanchéité 6 et 7 par exemple en EVA ou par un ruban adhésif approprié.

On va maintenant décrire une réalisation recommandée du procédé de l'invention en liaison avec les figures 1, 2a à 2i.

Une composition polymérisable par le rayonnement ultra-violet 8 est introduite dans la cavité du moule entre les parties de moule 2 et 3.

Comme le montre la figure 2a, on fait passer le moule sous une lampe UV de puissance choisie et pendant un temps d'exposition tel que la polymérisation de la composition soit incomplète pour obtenir un prépolymère.

Bien évidemment, les conditions d'obtention du prépolymère varient en fonction de la nature de la composition polymérisable par le rayonnement ultra-violet. En général, on utilise un rayonnement UV-A de manière à obtenir sur la surface de la composition une énergie surfacique, de préférence comprise entre 1,5 et 6 J/cm² pendant un temps compris de préférence entre 5 et 60 secondes. A ce stade, le degré ou taux d'avancement du substrat à coeur est de préférence compris dans l'intervalle 75 à 85%.

Comme le montre la figure 2b, le moule 1 est enlevé et on expose une des surfaces du prépolymère à une atmosphère contenant de l'oxygène, par exemple l'air. Lorsqu'on utilise l'air à la température ambiante, comme atmosphère contenant l'oxygène, le temps d'exposition est généralement compris entre 5 et 30 minutes, de préférence entre 10 et 20 minutes, et mieux encore, est d'environ 15 minutes. Bien évidemment, les temps d'exposition dépendent de la température utilisée pour la diffusion de l'inhibiteur et sont réduits lorsque la température de diffusion est accrue. Dans ces conditions, on obtient une couche superficielle mince inhibée ayant une profondeur comprise entre 30µm et 200µm, et de préférence de l'ordre de 40 à 80µm environ.

La figure 2c montre un tel prépolymère 8 comportant une mince couche superficielle 10 inhibée par rapport à la partie sousjacente 9 du prépolymère.

Comme le montre la figure 2d, le prépolymère comportant une mince couche superficielle inhibée 10 est alors amené une nouvelle fois sous une lampe à rayonnement UV, de préférence UV-A et est irradié dans l'atmosphère ambiante, par exemple l'air, pour achever la polymérisation dans la partie non inhibée 9 du prépolymère. L'intensité du rayonnement et la durée d'irradiation dépendent bien sûr de la nature du prépolymère et du degré de polymérisation voulu. On utilise de préférence un rayonnement UV-A de manière à obtenir sur la surface du prépolymère une énergie surfacique de préférence comprise entre 7 et 25 J/cm² pendant une durée de préférence comprise entre 60 et 300 secondes de plus.

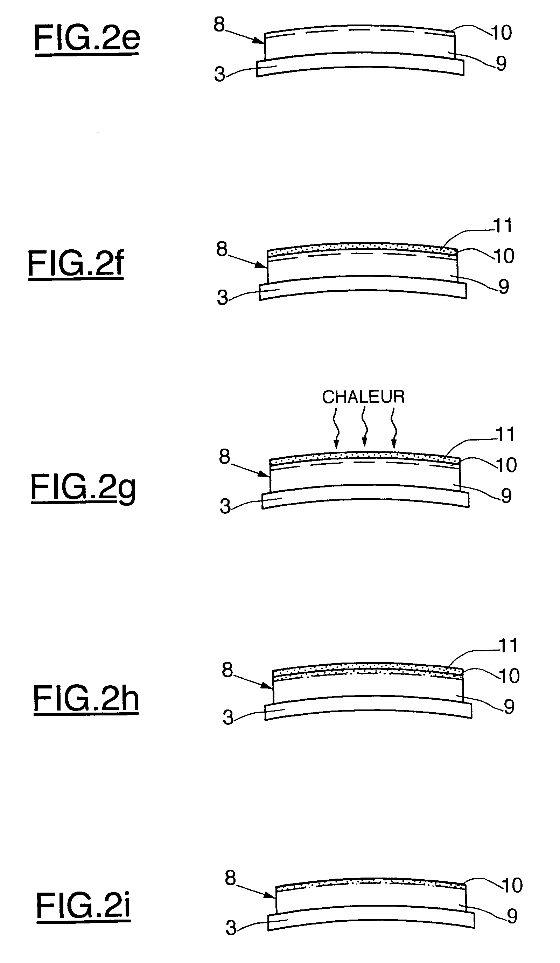

Après un recuit classique de relaxation des contraintes à une température généralement comprise entre 100° et 120°C, pendant environ 1 à 5 heures en présence d'une atmosphère contenant de l'oxygène, par exemple de l'air, on obtient un substrat en verre organique transparent comportant une couche mince superficielle 10 polymérisée à un degré d'avancement notablement inférieur au reste 9 du substrat comme représenté à la figure 2e. Cette couche mince superficielle a de préférence une épaisseur comprise en 40 et 80 µm. A ce stade, le degré ou taux dans la couche superficielle mince décroit en fonction de l'éloignement par rapport au coeur du substrat d'une valeur allant de 5 à 20 % par rapport au degré ou taux d'avancement au coeur du substrat.

Le substrat en verre organique transparent est obtenu , représenté à la figure 2e est stable et peut être stocké et commercialisé tel quel.

Neammoins, de préférence, on réalise une photochromatisation de ce substrat, par exemple par transfert thermique.

Comme le montre la figure 2f, pour réaliser cette photochromatisation par transfert thermique, on dépose sur la surface du substrat adjacente à la couche mince superficielle 10 de degré d'avancement inférieur, un film mince 11 d'un matériau photochromique, par exemple, un vernis contenant une susbtance photochromique.

Une fois le film mince 11 de matériau photochromique appliqué sur la surface du substrat, on chauffe l'ensemble du substrat et du film 11 comme le montre la figure 2g pour diffuser la substance photochromique du film 11 de matériau photochromique dans la couche mince superficielle de degré d'avancement inférieur 10.Les températures de transfert sont en général comprises entre 100 et 250°C, et de préférence entre 125 et 160°C environ.

La durée du transfert thermique est généralement comprise entre 15 minutes et 60 minutes , et est de préférence de 30 minutes environ.

On obtient ainsi un ensemble comportant un substrat en verre organique transparent pourvu d'une couche mince surperficielle photochromique 10 dont le degré d'avancement est inférieur à celui du reste 9 du substrat et un film 11 appauvri en substance photochromique comme représenté à la figure 2h.

On enlève ensuite, par tout procédé approprié connu, et en particulier par pelage le film de matériau photochromique 11 pour obtenir le substrat ou article ophtalmique en verre organique transparent comportant une mince couche superficielle photochromique 10 dont le degré d'avancement est inférieur à celui du reste 9 du substrat ou de l'article comme représenté à la figure 2i.

En utilisant le procédé de la présente invention, on obtient des substrats et articles optiques et ophtalmiques en verre organique transparent présentant un meilleur compromis entre les propriétés thermomécaniques et les propriétés photochromiques, en particulier la densité optique et la vitesse d'éclaircissement tout en permettant l'utilisation d'une large variété de compositions de verres organiques.

Les substrats et articles optiques ou ophtalmiques obtenus par le procédé de la présente invention, lorsqu'ils constituent des substrats et articles semi-finis ont des propriétés thermomécaniques permettant des opérations de surfaçage sans risque de déformation ou endommagement des substrats et articles.

### EXEMPLE 1

On fabrique quatre substrats ophtalmiques ayant une épaisseur au centre de 2mm à partir de la composition polymérisable suivante :

| | % en poids |
|---|---|
| Tétraéthoxy bisphénol-A diméthacrylate (correspondant au monomère de formule (I) dans laquelle m + n = 4) | 98 |
| 3-méthyl-2-butène-1-ol | 2 |
| Photoinitiateur Darocur® 4265 | 0,15 parties en poids |

Deux des substrats sont fabriqués en utilisant le procédé de photopolymérisation préféré selon l'invention décrit ci-dessus et deux substrats sont fabriqués par un procédé de polymérisation classique, sans étape d'inhibition. Les conditions et paramètres utilisés dans ces procédés sont rassemblés dans le tableau I ci-dessous.

Afin d'avoir des résultats totalement comparatifs, les substrats fabriqués selon le procédé classique sont soumis aussi à une étape de prépolymérisation et de polymérisation où l'irradiation est la même que dans le procédé selon l'invention.

Les substrats fabriqués par le procédé selon l'invention sont désignés par "substrat 1 et 2" cependant que les substrats fabriqués par le procédé classique sont désignés par "substrat A et substrat B".

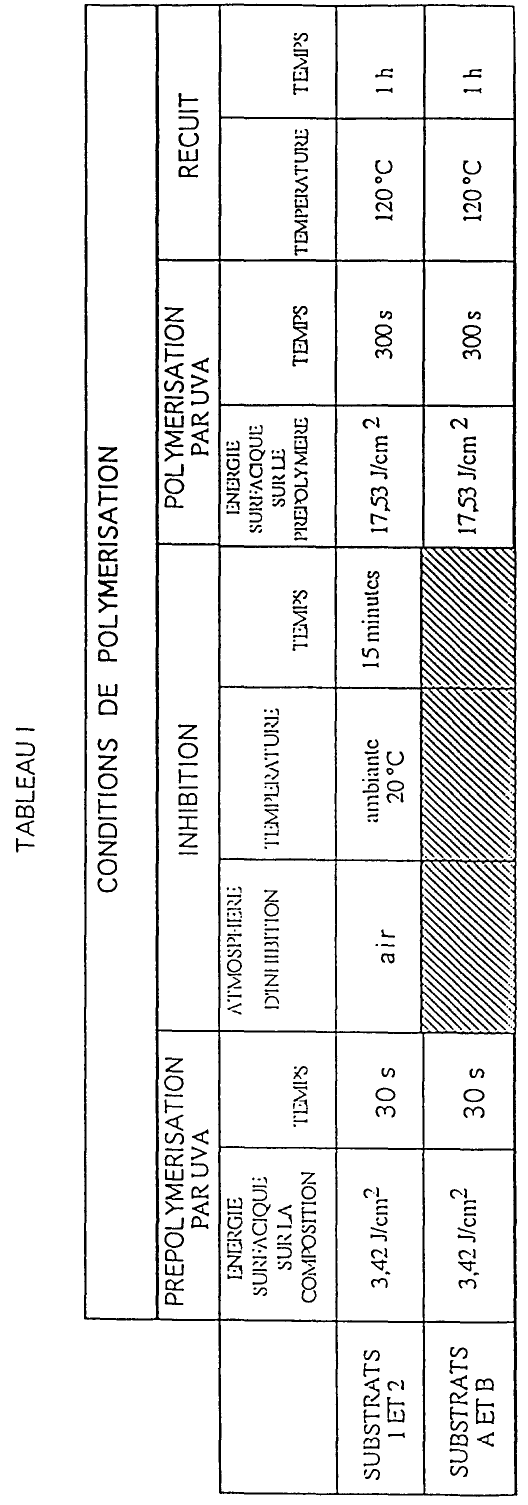

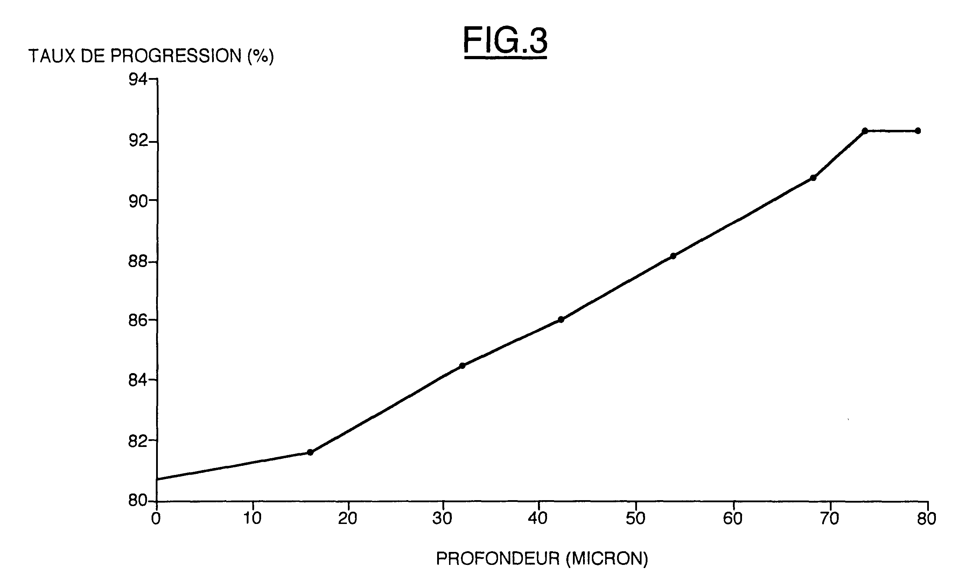

Le graphe de la Figure 3 représente le taux d'avancement du substrat 1 (ou du substrat 2), obtenu par inhibition à l'oxygène, mesuré par microscopie RAMAN, et avant photochromatisation. Comme le montre le graphe, à une profondeur d'environ 80µm le taux devient constant à une valeur d'environ 92,4%. Ce taux décroît pratiquement de façon continue depuis cette profondeur jusqu'à la surface atteignant une valeur d'environ 81,5% pour une profondeur d'environ 15µm, soit une diminution de 12% environ.

On soumet les substrats à une photochromatisation par transfert thermique en utilisant deux vernis photochromiques ayant la composition générale suivante, exprimée en poids :

| | |
|---|---|
| acétobutyrate de cellulose | 18% |
| composé photochromique | 2% |
| méthyléthylcétone (solvant) | 80% |

Dans le premier vernis, le composé photochromique est une spirooxazine de formule :

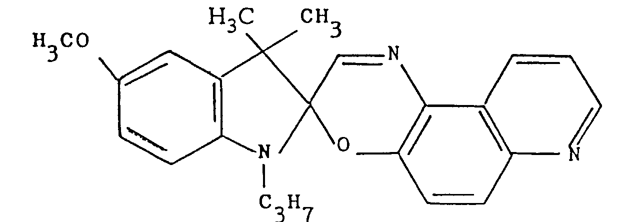

Ce composé est décrit plus particulièrement dans la demande de brevet WO-90/12819.

Dans le second vernis, le composé photochromique est un chromène de formule :

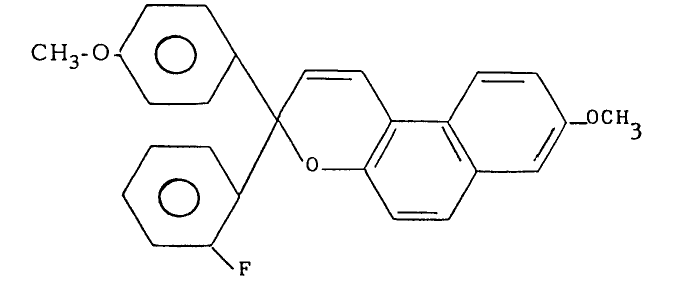

Ce composé est décrit plus particulièrement dans la demande de brevet WO-90/17071.

On revêt les substrats 1 et A avec le premier vernis et les substrats 2 et B avec le second vernis.

Les substrats 1 et 2 sont revêtus avec le vernis sur leur face adjacente à la couche mince superficielle de degré d'avancement inférieur.

Les substrats revêtus sont placés dans une étuve et chauffés à 135°C pendant 30 minutes. On retire les substrats et on les laisse refroidir jusqu'à la température ambiante dans l'atmosphère. On enlève alors les films de vernis par pelage.

On mesure la densité optique maximale DO₁₅ à 20°C des substrats photochromiques obtenus de la manière suivante :

Les substrats sont soumis pendant 15 minutes à l'éclairement d'une lampe xénon de 150 watts ayant un flux énergétique surfacique de 0,5 mW/cm² dans l'ultrat-violet de longueur d'onde comprise entre 300 et 400nm et un éclairement lumineux de 13klux dans le visible.

On mesure, après cette irradiation de 15 minutes, la densité optique de chacun des substrats à la longueur d'onde correspondant au maximum d'absorption dans le visible du composé photochromique incorporé au substrat. Cette densité optique est la densité optique maximale DO₁₅.

Après 15 minutes d'irradiation et extinction de la lampe xénon, on poursuit la mesure de la densité optique. On relève, pour chaque substrat, le temps au bout duquel la densité optique atteint la valeur 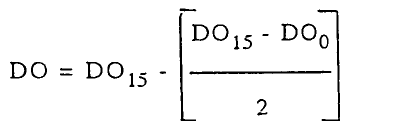 où DO₀ est la densité optique du substrat à l'état initialement non excité.

Ce temps (t1/2 éclaircissement) est appelé demi-temps d'éclaircissement.

Les résultats de ces mesures sont données dans le tableau II ci-dessous.

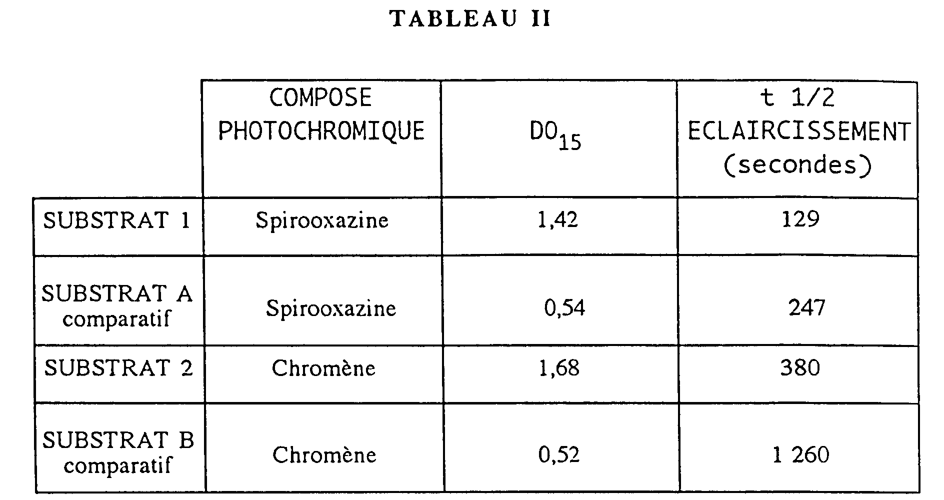

Les substrats photochromiques obtenus par le procédé de l'invention présentent des densités optiques maximales nettement supérieures aux articles obtenus par polymérisation directe complète. Ils présente également des vitesses d'éclaircissement après irradiation très supérieures comme le montre la comparaison des demi-temps d'éclaircissement.

### EXEMPLE 2

On prépare une solution renfermant en poids, 2 % d'acétobutyrate de cellulose, 0,03 % d'un tensio-actif (silane fluoré FC430), 10 *%* d'un agent de transfert de chaîne (diisopropenylbenzène) par dissolution des composants dans un solvant approprié, dans le cas présent, la méthylisobutylcétone.

On revêt la surface interne de la partie concave du moule par centrifugation (spin coating) avec la solution précédemment préparée. On évapore le solvant en plaçant la partie concave revêtue du moule dans une étuve à air à température ambiante pendant 30 minutes.

On assemble la partie concave du moule ainsi revêtue avec la partie convexe du moule et l'on coule dans le moule la composition de l'exemple 1. On soumet alors la composition coulée à une irradiation par UVA dans les conditions indiquées au tableau I pour les substrats A et B.

Après démoulage, on obtient un substrat en verre organique ayant une épaisseur au centre de 2 mm et présentant une couche superficielle mince polymérisée à un degré d'avancement notablement inférieur à celui du reste du substrat.

Le substrat en verre organique est ensuite soumis à une photochromatisation comme dans l'exemple 1.

Les performances du substrat photochromique obtenu (DO₁₅ ; t 1/2) sont du même ordre que celles des substrats 1 et 2 de l'exemple 1.

### EXEMPLE 3

On répète l'exemple 2 en remplaçant dans la solution l'agent de transfert de chaîne par un inhibiteur de polymérisation, à savoir la méthoxyhydroquinone.

Le substrat photochromique obtenu a des performances analogues aux substrats 1 et 2 de l'exemple 1.

## Revendications

1. Procédé de fabrication d'un substrat en verre organique transparent comprenant :
(a) l'introduction dans un moule d'une composition polymérisable en un verre organique transparent ; et
(b) la polymérisation de la composition dans des conditions telles que le substrat en verre organique transparent résultant présente au moins une couche superficielle mince polymérisée à un degré d'avancement et/ou de réticulation notablement inférieur à celui du reste du substrat.

2. Procédé de fabrication selon la revendication 1, caractérisé en ce qu'il comprend en outre après l'étape (b) de polymérisation et/ou de réticulation :
(c) un recuit thermique de relaxation des contraintes du substrat.

3. Procédé selon la revendication 1 ou 2, caractérisé en ce que l'étape de polymérisation (b) comprend la mise en contact d'au moins une surface de la composition polymérisable avec un inhibiteur de polymérisation et/ou un agent de transfert de chaîne pour former une mince couche superficielle qui, une fois la polymérisation et/ou la réticulation achevée, formera ladite couche superficielle de degré d'avancement et/ou de réticulation notablement inférieur.

4. Procédé selon l'une quelconque des revendications 1 à 3, caractérisé en ce que l'inhibiteur de polymérisation est choisi parmi l'oxygène, les hydroquinones, les quinones, les aldéhydes aromatiques, les composés aromatiques nitrés et les nitroso cétones et l'agent de transfert de chaîne est choisi parmi les hydrocarbures aliphatiques bromés, les hydrocarbures aliphatiques chlorés, les thiols aliphatiques et le diisopropénylbenzène.

5. Procédé selon la revendication 1 ou 2, caractérisé en ce que l'étape (b) est une étape de polymérisation qui comprend :
1) la polymérisation partielle de la composition polymérisable pour former un prépolymère ;
2) la mise en contact d'au moins une surface du prépolymère avec un inhibiteur de polymérisation et la diffusion de l'inhibiteur de polymérisation dans le prépolymère pour former au moins une mince couche superficielle inhibée dans le prépolymère ; et
3) la reprise de la polymérisation du prépolymère pour obtenir le substrat en verre organique transparent comportant au moins une couche superficielle mince polymérisée à un degré d'avancement notablement inférieur à celui du reste du substrat.

6. Procédé selon la revendication 5, caractérisé en ce que l'inhibiteur de polymérisation est l'air, l'oxygène ou un mélange gazeux contenant de l'oxygène.

7. Procédé selon l'une quelconque des revendications 1 à 4, caractérisé en ce que l'inhibiteur de polymérisation et/ou l'agent de transfert de chaîne 'est disposé sous la forme d'un revêtement sur une face interne du moule.

8. Procédé selon l'une quelconque des revendications 1 à 7, caractérisé en ce que la composition polymérisable est une composition photopolymérisable et en ce que l'étape de polymérisation est une étape de photopolymérisation.

9. Procédé selon l'une quelconque des revendications précédentes caractérisé en ce que la composition polymérisable comprend essentiellement un monomère ou un mélange de monomères choisi parmi les monomères vinyliques, (allyl carbonate) de polyols acryliques, méthacryliques en particulier les monomères répondant à la formule 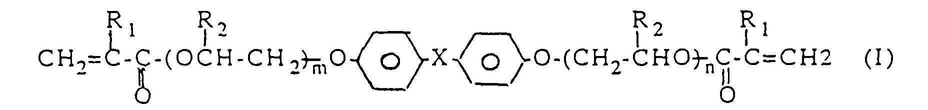 dans laquelle R₁ et R₂, identiques ou différents, désignent l'hydrogène, un alkyle en C₁-C₆ ;
X désigne O, S, CO, SO₂, -CH₂-, -CH=CH-, ou 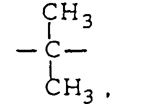 m + n sont des entiers et 0 ≤ m + n ≤ 10.

10. Procédé selon l'une quelconque des revendications précédentes, caractérisé en ce que la composition est une composition photopolymérisable et comprend un photoinitiateur de polymérisation.

11. Procédé selon l'une quelconque des revendications précédentes caractérisé en ce que ladite couche superficielle mince a une épaisseur comprise entre 30 et 200µm, de préférence 30 et 150µm et mieux 40 et 80µm.

12. Substrat en verre organique transparent comprenant au moins une couche superficielle mince polymérisée à un degré d'avancement et/ou de réticulation notablement inférieur à celui du reste du substrat.

13. Substrat selon la revendication 12, caractérisé en ce que le substrat est un article ophtalmique en verre organique transparent.

14. Substrat selon la revendication 13, caractérisé en ce que l'article ophtalmique est un article semi-fini.

15. Substrat selon l'une quelconque des revendications 12 à 14, caractérisé en ce que ladite couche superficielle mince a une épaisseur comprise entre 30 et 200µm, de préférence 30 et 150µm et mieux 40 et 80µm.

16. Procédé de fabrication d'un substrat en verre organique transparent, photochromique comprenant :
- l'obtention d'un substrat selon l'une quelconque des revendications 1 à 11 ; et
- la mise en contact d'au moins la surface de la couche mince superficielle de degré d'avancement et/ou de réticulation inférieur avec une substance photochromique et la diffusion de ladite substance photochromique dans ladite couche mince superficielle.

17. Procédé selon la revendication 16, caractérisé en ce que la mise en contact et la diffusion de la substance photochromique s'effectue par un procédé de transfert thermique.

18. Substrat en verre organique transparent photochromique, comprenant au moins une couche mince superficielle contenant d'une substance photochromique, ladite couche mince superficielle étant polymérisée à un degré d'avancement et/ou de réticulation notablement inférieur au reste du substrat.

19. Substrat selon la revendication 18, caractérisé en ce que le substrat est un article ophtalmique en verre organique transparent.

20. Substrat selon la revendication 19, caractérisé en ce que l'article est un article ophtalmique semi-fini.

21. Substrat selon l'une quelconque des revendications 18 à 20, caractérisé en ce que ladite couche superficielle mince a une épaisseur comprise entre 30 et 200µm, de préférence 30 et 150µm et mieux 40 et 80µm.

## Claims

1. Process for the manufacture of a substrate made of transparent organic glass comprising:
(a) the introduction into a mould of a composition which is polymerizable according to a transparent organic glass; and
(b) the polymerization of the composition under conditions such that the resulting substrate made of transparent organic glass has at least a thin surface layer polymerized to a degree of progression and/or of crosslinking which is appreciably lower than that of the remainder of the substrate.

2. Manufacturing process according to claim 1, characterized in that it additionally comprises, after the step (b) of polymerization and/or of crosslinking:
(c) a stress-relieving thermal annealing of the substrate.

3. Process according to claim 1 or 2, characterized in that the polymerization step (b) comprises bringing at least one surface of the polymerizable composition into contact with a polymerization inhibitor and/or a chain transfer agent in order to form a thin surface layer which, once the polymerization and/or the crosslinking is complete, will form the said surface layer with a significantly lower degree of progression and/or of crosslinking.

4. Process according to any one of claims 1 to 3, characterized in that the polymerization inhibitor is selected from oxygen, hydroquinones, quinones, aromatic aldehydes, aromatic nitro compounds and nitroso ketones and the chain transfer agent is selected from brominated aliphatic hydrocarbons, chlorinated aliphatic hydrocarbons, aliphatic thiols and diisopropenylbenzene.

5. Process according to claim 1 or 2, characterized in that the step (b) is a polymerization step which comprises:
1) partially polymerizing the polymerizable composition in order to form a prepolymer;
2) bringing at least one surface of the prepolymer into contact with a polymerization inhibitor and diffusing the polymerization inhibitor into the prepolymer in order to form at least one inhibited thin surface layer in the prepolymer; and
3) resuming the polymerization of the prepolymer in order to obtain the substrate made of transparent organic glass containing at least a thin surface layer polymerized to a degree of progression which is significantly lower than that of the remainder of the substrate.

6. Process according to claim 5, characterized in that the polymerization inhibitor is air, oxygen or a gas mixture containing oxygen.

7. Process according to any one of claims 1 to 4, characterized in that the polymerization inhibitor and/or chain transfer agent is provided as a coating on an internal face of the mould.

8. Process according to any one of claims 1 to 7, characterized in that the polymerizable composition is a photopolymerizable composition and in that the polymerization step is a photopolymerization step.

9. Process according to any one of the preceding claims, characterized in that the polymerizable composition substantially comprises a monomer or a mixture of monomers selected from vinyl, polyol allyl carbonate, acrylic or methacrylic monomers, in particular the monomers corresponding to the formula: 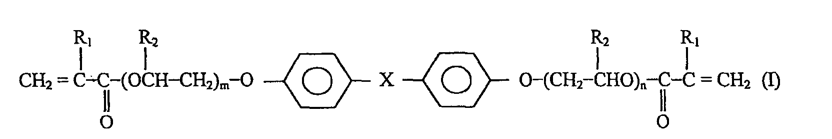 in which
R₁ and R₂, which are identical or different, are hydrogen or a C₁-C₆, alkyl group;
X is O, S, CO, SO₂, -CH₂-, -CH=CH, or 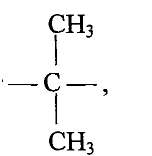
m + n are integers and 0 ≤ m + n ≤ 10.

10. Process according to any one of the preceding claims, characterized in that the composition is a photopolymerizable composition and comprises a polymerization photoinitiator.

11. Process according to any one of the preceding claims, characterized in that the thin surface layer has a thickness between 30 µm and 200 µm, preferably between 30 µm and 150 µm, particularly between 40 µm and 80 µm.

12. Substrate made of transparent organic glass comprising at least a thin surface layer polymerized to a degree of progression and/or of crosslinking which in significantly lower than that of the remainder of the substrate.

13. Substrate according to claim 12, characterized in that the substrate is an ophthalmic item made of transparent organic glass.

14. Substrate according to claim 13, characterized in that the ophthalmic item is a semi-finished item.

15. Substrate according to any one of claims 12 to 14, characterized in that the thin surface layer has a thickness between 30 µm and 200 µm, preferably between 30 µm and 150 µm, particularly between 40 µm and 80 µm.

16. Process for the manufacture of a substrate made of photochromic transparent organic glass comprising:
- producing a substrate according to any one of claims 1 to 11; and
- bringing at least the surface of the thin surface layer with a lower degree of progression and/or of crosslinking into contact with a photochromic substance and diffusing the said photochromic substance into the said thin surface layer.

17. Process according to claim 16, characterized in that the photochromic substance is brought into contact and diffused by a thermal transfer process.

18. Substrate made of photochromic transparent organic glass comprising at least a thin surface layer containing a photochromic substance, the said thin surface layer being polymerized to a degree of progression and/or of crosslinking which in significantly lower than that of the remainder of the substrate.

19. Substrate according to claim 18, characterized in that the substrate is an ophthalmic item made of transparent organic glass.

20. Substrate according to claim 19, characterized in that the item is a semi-finished ophthalmic item.

21. Substrate according to any one of claims 18 to 20, characterized in that the thin surface layer has a thickness between 30 µm and 200 µm, preferably between 30 µm and 150 µm, particularly between 40 µm and 80 µm.

## Patentansprüche

1. Verfahren zur Herstellung eines Substrats aus transparentem organischem Glas, umfassend:
(a) Einführung einer Zusammensetzung, die sich zu einem transparenten organischen Glas polymerisieren lässt, in eine Form; und
(b) Polymerisation der Zusammensetzung unter solchen Bedingungen, dass das resultierende Substrat aus transparentem organischem Glas wenigstens eine dünne Oberflächenschicht aufweist, die mit einem Polymerisations- und/oder Vernetzungsgrad polymerisiert ist, der deutlich geringer ist als für den Rest des Substrats.

2. Herstellungsverfahren gemäß Anspruch 1, dadurch gekennzeichnet, dass es nach dem Schritt (b) der Polymerisation und/oder Vernetzung außerdem folgendes umfasst:
(c) Tempern zum Relaxieren der Spannungen des Substrats.

3. Verfahren gemäß Anspruch 1 oder 2, dadurch gekennzeichnet, dass der Polymerisationsschritt (b) das In-Kontakt-Bringen wenigstens einer Oberfläche der polymerisierbaren Zusammensetzung mit einem Polymerisationsinhibitor und/oder einem Kettenübertragungsmittel umfasst, so dass eine dünne Oberflächenschicht entsteht, welche später, sobald die Polymerisation und/oder Vernetzung abgeschlossen ist, die Oberflächenschicht mit dem deutlich geringeren Polymerisations- und/oder Vernetzungsgrad bildet.

4. Verfahren gemäß einem der Ansprüche 1 bis 3, dadurch gekennzeichnet, dass der Polymerisationsinhibitor aus Sauerstoff, Hydrochinonen, Chinonen, aromatischen Aldehyden, nitrierten aromatischen Verbindungen und Nitrosoketonen ausgewählt ist und das Kettenübertragungsmittel aus bromierten aliphatischen Kohlenwasserstoffen, chlorierten aliphatischen Kohlenwasserstoffen, aliphatischen Thiolen und Diisopropenylbenzol ausgewählt ist.

5. Verfahren gemäß Anspruch 1 oder 2, dadurch gekennzeichnet, dass Schritt (b) ein Polymerisationsschritt ist, der folgendes umfasst:
1) die partielle Polymerisation der polymerisierbaren Zusammensetzung unter Bildung eines Prepolymers;
2) das In-Kontakt-Bringen wenigstens einer Oberfläche des Prepolymers mit einem Polymerisationsinhibitor und die Diffusion des Polymerisationsinhibitors in das Prepolymer unter Bildung wenigstens einer gehemmten dünnen Oberflächenschicht im Prepolymer; und
3) Fortsetzung der Polymerisation des Prepolymers, so dass man das Substrat aus transparentem organischem Glas erhält, das wenigstens eine dünne Oberflächenschicht aufweist, die mit einem Polymerisationsgrad polymerisiert ist, der deutlich geringer ist als für den Rest des Substrats.

6. Verfahren gemäß Anspruch 5, dadurch gekennzeichnet, dass es sich bei dem Polymerisationsinhibitor um Luft, Sauerstoff oder ein sauerstoffhaltiges Gasgemisch handelt.

7. Verfahren gemäß einem der Ansprüche 1 bis 4, dadurch gekennzeichnet, dass der Polymerisationsinhibitor und/oder das Kettenübertragungsmittel in Form einer Beschichtung auf einer Innenfläche der Form vorliegen.

8. Verfahren gemäß einem der Ansprüche 1 bis 7, dadurch gekennzeichnet, dass die polymerisierbare Zusammensetzung eine photopolymerisierbare Zusammensetzung ist und dass der Polymerisationsschritt ein Photopolymerisationsschritt ist.

9. Verfahren gemäß einem der vorstehenden Ansprüche, dadurch gekennzeichnet, dass die polymerisierbare Zusammensetzung im wesentlichen ein Monomer oder Monomergemisch umfasst, das ausgewählt ist aus Vinylmonomeren, Allylcarbonat von Acryl- oder Methacrylpolyolen, wobei die Monomere insbesondere der Formel 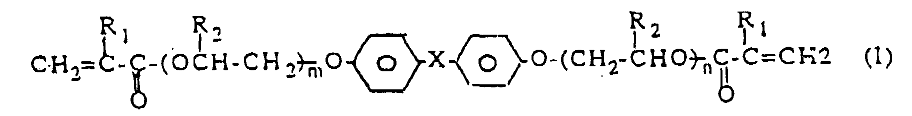 entsprechen, wobei R₁ und R₂ gleich oder verschieden sind und Wasserstoff oder ein C₁-C₆-Alkyl bedeuten;
X O, S, CO, SO₂, -CH₂-, -CH=CH- oder 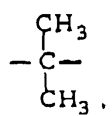 bedeutet;
m und n ganze Zahlen sind und 0 ≤ m + n ≤ 10 ist.

10. Verfahren gemäß einem der vorstehenden Ansprüche, dadurch gekennzeichnet, dass die Zusammensetzung eine photopolymerisierbare Zusammensetzung ist und einen Photoinitiator der Folymerisation umfasst.

11. Verfahren gemäß einem der vorstehenden Ansprüche, dadurch gekennzeichnet, dass die dünne Oberflächenschicht eine Dicke zwischen 30 und 200 µm, vorzugsweise zwischen 30 und 150 µm und besser zwischen 40 und 80 µm hat.

12. Substrat aus transparentem organischem Glas, das wenigstens eine dünne Oberflächenschicht umfasst, die mit einem Polymerisations- und/oder Vernetzungsgrad polymerisiert ist, der deutlich geringer ist als für den Rest des Substrats.

13. Substrat gemäß Anspruch 12, dadurch gekennzeichnet, dass das Substrat ein ophthalmischer Artikel aus transparentem organischem Glas ist.

14. Substrat gemäß Anspruch 13, dadurch gekennzeichnet, dass der ophthalmische Artikel ein Halbfabrikat ist.

15. Substrat gemäß einem der Ansprüche 12 bis 14, dadurch gekennzeichnet, dass die dünne Oberflächenschicht eine Dicke zwischen 30 und 200 µm, vorzugsweise zwischen 30 und 150 µm und besser zwischen 40 und 80 µm hat.

16. Verfahren zur Herstellung eines Substrats aus photochromem transparentem organischem Glas, umfassend:
- die Herstellung eines Substrats gemäß einem der Ansprüche 1 bis 11; und
- das In-Kontakt-Bringen wenigstens der Oberfläche der dünnen Oberflächenschicht mit dem geringeren Polymerisations- und/oder Vernetzungsgrad mit einer photochromen Substanz und die Diffusion der photochromen Substanz in die dünne Oberflächenschicht.

17. Verfahren gemäß Anspruch 16, dadurch gekennzeichnet, dass das In-Kontakt-Bringen und die Diffusion der photochromen Substanz mit einem thermischen Übertragungsverfahren erfolgt.

18. Substrat aus photochromem transparentem organischem Glas, das wenigstens eine dünne Oberflächenschicht umfasst, die eine photochrome Substanz enthält, wobei die dünne Oberflächenschicht mit einem Polymerisations- und/oder Vernetzungsgrad polymerisiert ist, der deutlich geringer ist als für den Rest des Substrats.

19. Substrat gemäß Anspruch 18, dadurch gekennzeichnet, dass das Substrat ein ophthalmischer Artikel aus transparentem organischem Glas ist.

20. Substrat gemäß Anspruch 19, dadurch gekennzeichnet, dass der Artikel ein ophthalmisches Halbfabrikat ist.

21. Substrat gemäß einem der Ansprüche 18 bis 20, dadurch gekennzeichnet, dass die dünne Oberflächenschicht eine Dicke zwischen 30 und 200 µm, vorzugsweise zwischen 30 und 150 µm und besser zwischen 40 und 80 µm hat.
